# EUROPÄISCHE PATENTSCHRIFT

(11) **EP 1 480 054 B1**
(45) Veröffentlichungstag und Bekanntmachung des Hinweises auf die Patenterteilung: **04.03.2009**
(21) Anmeldenummer: 04101513.2
(22) Anmeldetag: 14.04.2004
(51) Int. Cl.: G01S 7/06, B60K 31/00

(54) **Vorrichtung zur Geschwindigkeitsregelung eines Fahrzeugs**
Cruise control for a vehicle
Dispositif de régulation de la vitesse d'un véhicule

(30) Priorität: 23.05.2003 DE 10323465
(43) Veröffentlichungstag der Anmeldung: 24.11.2004
(73) Patentinhaber: ROBERT BOSCH GMBH, 70442 Stuttgart (DE)
(72) Erfinder: Michi, Harald, 75248, Oelbronn-Duerrn (DE); Klotz, Albrecht, 72076, Tuebingen (DE)

(56) Entgegenhaltungen:
- EP-A- 0 464 821
- EP-A- 1 014 109
- EP-A- 1 264 734
- EP-B- 0 493 822
- DE-A- 19 826 283
- US-A- 5 230 400
- PATENT ABSTRACTS OF JAPAN Bd. 2000, Nr. 02, 29. Februar 2000 (2000-02-29) -& JP 11 326519 A (UNISIA JECS), 26. November 1999 (1999-11-26)

## Beschreibung

Die Erfindung betrifft eine Vorrichtung zur Geschwindigkeitsregelung eines Fahrzeugs.

### Stand der Technik

Ein dynamischer Fahrgeschwindigkeitsregler "AdaptivCruiseControl (ACC)" ist in verschiedenen Ausprägungen bereits erfolgreich im Markt eingeführt. Die derzeitigen Systeme sind in erster Linie für Autobahnen und gut ausgebaute Landstraßen ausgelegt. Zur Anzeige, wie eine Geschwindigkeitsregelung in Bezug auf ein Zielobjekt stattfindet, sind eindimensionale Grafiken mit kontinuierlicher Abstandsinformation bzw. skalare Grafiken mit diskreter Abstandsinformation im Markt. Im städtischen Verkehr ist ein solches ACC wenig tauglich.

### Aufgabe und Vorteile der Erfindung

Der Erfindung liegt die Aufgabe zugrunde, eine Vorrichtung zur Geschwindigkeitsregelung eines Fahrzeugs bereitzustellen, das einen vielfältigern Einsatz, insbesondere über Standardsituationen auf Autobahnen hinaus erlaubt.

Diese Aufgabe wird durch die Merkmale des Anspruchs 1 gelöst.

In den Unteransprüchen sind vorteilhafte und zweckmäßige Weiterbildungen der Erfindung angegeben.

Zunächst geht die Erfindung von einer Vorrichtung zur Geschwindigkeitsregelung eines Fahrzeugs mit einer Basiseinrichtung aus, die Steuermittel zur Detektierung wenigstens eines Umfelds vor dem Fahrzeug auf vorhandene Objekte, insbesondere Fahrzeuge, eine Anzeige und eine Elektronikeinheit umfasst, die zur Darstellung von wenigstens einem detektierten Objekt, falls vorhanden, auf der Anzeige ausgelegt ist. Ein wesentlicher Aspekt liegt nun darin, dass die Basiseinrichtung dazu ausgebildet ist, eine aktuelle Fahrszene mit mehreren Objekten über die Sensormittel zu erfassen, auf der Anzeige darzustellen und eine Visualisierung vorzunehmen, anhand der ein Anwender erkennen kann, ob ein Objekt und falls ein Objekt, welches Objekt, bei mehreren Objekten als Zielobjekt für eine aktuelle oder kurz bevorstehende Fahrgeschwindigkeitsregelung ausgewählt ist. Durch die Wiedergabe einer tatsächlichen Verkehrssituation oder eines Ausschnitts hiervon mit mehreren Objekten in einer entsprechenden Fahrszene mit mehreren Objekten, die beispielsweise auf Symbole reduziert ist, hat ein Anwender nicht nur die Möglichkeit, eine komplexe Fahrsituation schnell und sicher zu erfassen, sondern auch in Bezug auf die Fahrgeschwindigkeitsregelung zu bringen. Denn falls ein Objekt als Zielobjekt, an der sich die Fahrgeschwindigkeitsregelung orientiert, ausgewählt ist, ist dieses in der Gesamtszene visuell entsprechend hervorgehoben.

In der deutschen Offenlegungsschrift DE 198 26 283 ist ein Verfahren zur Anzeige eines vor einem Fahrzeug befindlichen Objekts, insbesondere eines vorausfahrenden Kraftfahrzeuges mittels mindestens einer Abstandssensorik und eines Head-Up-Displays bekannt. Ein über die Abstandssensorik erfasstes Objekt wird mittels eines Symbols im Head-Up-Display dargestellt, wobei das Symbol lokal an der Stelle im Head-Up-Display angeordnet ist, an der sich das real erfasste Objekte im Gesichtsfeld des Fahrzeugführers befindet. Auf dem Display lassen sich auch mehrere Fahrzeuge darstellen, wobei das Fahrzeug, das für die aktuelle Verkehrssituation relevant ist, entsprechend hervorgehoben wird. Bei diesem System geht es lediglich darum, eine Verkehrssituation zu erfassen und für einen Anwender darzustellen. Eine Weiterverarbeitung dieser Informationen für ein Fahrgeschwindigkeitsregelsystem ist hieraus nicht zu entnehmen.

Aus der JP 11-326519 Abstract ist eine Vorrichtung zur Hinderniserfassung bekannt, bei der ein vorausfahrendes Fahrzeug hinsichtlich seiner Geschwindigkeit und des Abstandes zu dem eigenen Fahrzeug detektiert wird. Das Ergebnis wird in einer Anzeige dargestellt.

Aus der US 5,320,400 ist eine Geschwindigkeitsregelungseinrichtung für ein Fahrzeug bekannt. Ein von der Kamera erfasstes Objekt, auf das geregelt wird, wird in einer Bildschirmanzeige durch einen in das Kamerabild eingeblendeten Pfeil hervorgehoben.

Ein bevorzugter Aspekt der Erfindung ist darin zu sehen, dass die Basiseinrichtung dazu ausgestaltet ist, eine aktuelle Verkehrsszene über die Sensormittel zu erfassen, auf der Anzeige darzustellen und eine Visualisierung der Fahrszene durch wenigstens ein zusätzliches Symbol neben gegebenenfalls vorhandenen dargestellten Objekte vorzunehmen, anhand dem ein Anwender die Auswahl oder die Nichtauswahl eines Objekts als Zielobjekt, das für eine aktuelle oder kurz bevorstehende Fahrgeschwindigkeitsregelung herangezogen wird, erkennen kann. Beispielsweise wird ein Pfeil benutzt, der auf ein Objekt, z. B. ein Fahrzeug in einer Fahrszene zeigt, um deutlich zu machen, dass eine Geschwindigkeitsregelung genau in Bezug auf dieses Objekt stattfindet. Der Pfeil kann jedoch auch in Fahrtrichtung an einem sich vor dem Fahrzeug befindendem Objekt vorbeigehen, um herauszustellen, dass zwar dieses Objekt sich vor dem Fahrzeug befindet, eine Geschwindigkeitsregelung in Bezug hierauf jedoch nicht stattfindet. Ist kein Objekt dargestellt, sondern lediglich ein Pfeil, kann hieraus leicht auf freie Fahrt geschlossen werden.

In einer weiteren besonders bevorzugten Ausgestaltung ist die Basiseinrichtung zur grafischen Hervorhebung des Zielobjekts auf der Anzeige ausgelegt. Beispielsweise wird ein als Zielobjekt ausgewähltes Objekt farblich gekennzeichnet. Insbesondere in Kombination mit einem zusätzlichen Symbol, das ein Objekt als Zielobjekt hervorhebt, z.B. ein Pfeil, ergibt sich eine Darstellung, die ein Anwender schnell erfassen kann, um jederzeit eine hohe Transparenz über das Fahrgeschehen, sozusagen mit einem Blick, zu erhalten.

Beider Erfindung ist die Basiseinrichtung dazu ausgebildet, in der dargestellten Fahrzeugszene ein für diese Fahrzeugszene von der Einrichtung vorgegebenes, vom Anwender zu erwartendes Lenkmanöver, gegebenenfalls in Bezug auf das Zielobjekt auf der Anzeige hervorzuheben. Beispielsweise wird neben einem vorausfahrenden Zielfahrzeug ein weiteres Fahrzeug im "Fahrschlauch" erfasst, wobei noch genügend Platz besteht, dieses Fahrzeug zu umfahren. In diesem Fall kann die Basiseinrichtung durch eine geeignete Symbolik (z.B. ein Umfahrpfeil, der nach wie vor auf das Zielfahrzeug zeigt) ein Umfahren des weiteren Objekts, z.B. ein sehr langsames Fahrzeug, vorschlagen.

Um die Übersichtlichkeit auf der Anzeige weiter zu erhöhen, wird überdies vorgeschlagen, dass die Basiseinrichtung zur Darstellung des eigenen Fahrzeugs auf der Anzeige ausgelegt ist. Hierdurch kann die Fahrszene noch leichter erfasst werden.

Die Erfassung einer Fahrszenen lässt sich bei einer bevorzugten Ausgestaltung der Erfindung zusätzlich damit verbessern, dass die Größe/Ausdehnung wenigstens des Zielobjektes und gegebenenfalls auch weiterer Objekte, vorzugsweise aller Objekte in der Darstellung auf der Anzeige mit der Objektentfernung korreliert werden, insbesondere monoton korreliert werden. Dadurch erscheinen weiter entfernte Objekte kleiner als näher beabstandete.

Die Transparenz einer Fahrszene wird im Weiteren vorteilhaft damit begünstigt, dass die Basiseinrichtung zur maßstabsgetreuen Darstellung des Zielobjekts und gegebenenfalls weiterer Objekte, vorzugsweise aller Objekte auf der Anzeige ausgestaltet ist. Insbesondere in diesem Zusammenhang ist es außerdem bevorzugt, dass eine Abbildung von Fahrbahnbegrenzungen auf der Anzeige vorgesehen ist, z.B. symbolisch durch Linien.

Der Informationsgehalt der Darstellung auf der Anzeige kann bei einer vorteilhaften Ausführungsform außerdem damit erhöht werden, dass die Basiseinheit zur Vornahme einer grafischen Veränderung ausgelegt ist, wenn die Geschwindigkeit des Zielobjekts größer ist als die des Eigenfahrzeugs bzw. wenn ein erhöhter Verzögerungsbedarf besteht. Beispielsweise kann für den Fall, dass das Zielobjekt eine größere Geschwindigkeit besitzt als das Eigenfahrzeug, ein Farbumschlag stattfinden, z.B. von orange nach grün. Für den Fall, dass das Zielobjekt seine Geschwindigkeit gegebenenfalls schnell vermindert, also ein erhöhter Verzögerungsbedarf besteht, kann ein Farbumschlag des Zielobjekts z.B. von orange nach rot vorgenommen werden, um diese Situation einem Anwender, z.B. dem Fahrzeuglenker unmissverständlich zu signalisieren.

### Zeichnungen

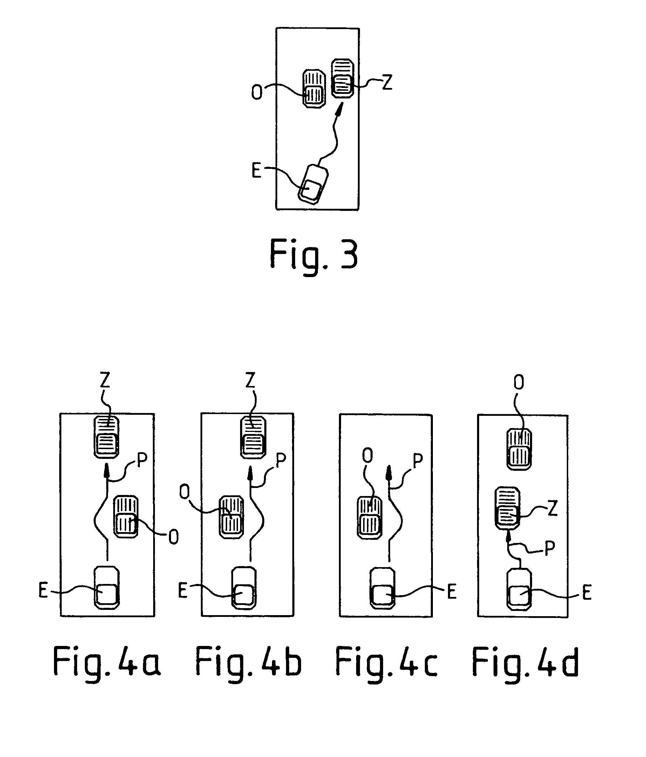

Mehrere Ausführungsbeispiele der Erfindung sind in den nachfolgenden Zeichnungen unter Angabe weiterer Vorteile und Einzelheiten näher erläutert. Die Figuren 3 bis 4d zeigen die auf einem Display einer erfindungsgemässen Fahrgeschwindigkeitsregelungseinrichtung symbolisch dargestellten Fahrsituationen aufgrund von tatsächlichen Fahrsituationen.

### Beschreibung der Zeichnungen

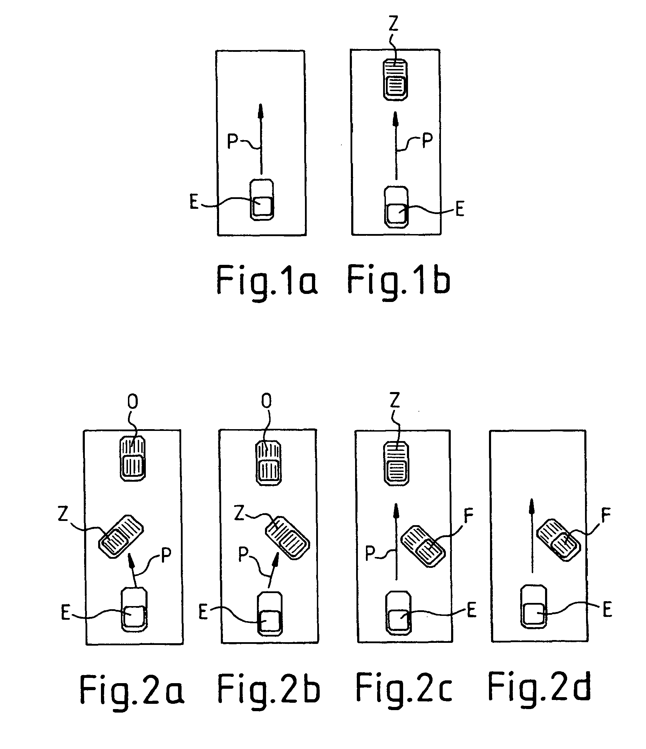

In Figur 1a ist das Eigenfahrzeug E zusammen mit einem Pfeil P symbolisch dargestellt, der auf kein weiteres Objekt oder Fahrzeug zeigt. Dies ist die Darstellung für freie Fahrt, d.h. es wurde kein Zielobjekt vor dem Eigenfahrzeug erkannt.

Figur 1b entspricht der Standardsituation "Folgefahrt" eines Objekts, z.B. eines PKWs, LKWs oder Motorrads ohne offensichtlich weitere in Betracht kommende Zielobjekte. Dementsprechend ist das Eigenfahrzeug E mit einem Pfeil P abgebildet, der auf ein Zielobjekt Z zeigt. Um das Zielobjekt Z noch besser zu verdeutlichen, kann dieses grafisch hervorgehoben, z.B. in einer anderen Farbe dargestellt werden, wie das Eigenfahrzeug E.

Die Darstellung in Figur 2a und 2b entspricht jeweils einer Einschersituation einmal von links und einmal von rechts, während sich das Eigenfahrzeug E noch in der Folgefahrt eines anderen Objekts O befindet. Gemäß Figur 2a hat die Fahrgeschwindigkeitsregelungseinrichtung den Einscherer von links erkannt und als neues Zielobjekt Z für die Regelung ausgewählt. Zusätzlich wird durch einen Pfeil P die Auswahl des Einscherers als neues Zielobjekt kenntlich gemacht. Auch in Figur 2b wurde der Einscherer als neues Zielobjekt Z herangezogen und zusätzlich dieser Vorgang durch einen Pfeil P unterstrichen.

In Figur 2c wurde eine Einschersituation eines Fahrzeugs F erkannt, die Regelung für die Fahrgeschwindigkeit erfolgt jedoch nach wie vor (noch) in Bezug auf das vorausfahrende Zielobjekt Z, was wiederum neben z.B. einer anderen Farbgebung durch einen Pfeil P herausgestellt wird. In der Situation nach Figur 2d wurde der Einscherer F zwar erkannt, eine Regelung hierauf findet jedoch (noch) nicht statt, was durch den ins Leere zeigenden Pfeil P neben dem nicht als Zielobjekt farblich herausgestellten Einscherer, für den Anwender hervorgehoben ist.

Figur 3 entspricht einer Fahrsituation, bei welcher die Fahrgeschwindigkeitsregelungsvorrichtung einen Ausschervorgang des Eigenfahrzeugs (z.B. Spurwechsel) erkennt und dementsprechend anstatt dem auf der ursprünglichen Spur vorausfahrenden Objekt O als neues Zielobjekt ein auf der Nachbarspur vorausfahrendes Fahrzeug Z auswählt. Neben der entsprechenden grafischen, z.B. Farbgestaltung des neuen Zielobjekts Z ist wiederum ein Pfeil vorgesehen, der die Änderung des Zielobjekts zusätzlich hervorhebt.

Eine weitere Fahrsituation stellt das Umfahren eines Objekts dar. Befindet sich ein Objekt, z.B. ein langsames Fahrzeug im aktuellen "Fahrschlauch" des Eigenfahrzeugs E (siehe hierzu insbesondere Figuren 4a bis 4c) und steht noch genügend (ungefährlich befahrbarer) Verkehrsraum zur Verfügung, so trifft die Fahrgeschwindigkeitsregelungsvorrichtung die Annahme, dass das Objekt vom Fahrer umfahren wird, was in vielen Fällen auch zutreffend ist. Gemäß der Figuren 4a und 4b wird das zu umfahrende Objekt O erkannt, wobei nach wie vor eine Regelung auf das vorausfahrende entsprechend grafisch hervorgehobene Zielfahrzeug Z stattfindet. Der Umfahrvorgang einmal links und einmal rechts ist zusätzlich durch einen Pfeil P hervorgehoben. In Figur 4c wurde das zu umfahrende Objekt O erkannt, wobei hierauf jedoch nicht reagiert wird. Dies ist durch den ins Leere zeigenden Pfeil P neben dem nicht grafisch als Zielobjekt herausgestellten Objekt O hervorgehoben.

Wird das Objekt O in den genannten Fällen nicht umfahren, erfolgt eine spätere heftigere Systemreaktion, um auf das Objekt O nicht aufzufahren.

In Figur 4d ist der Fall dargestellt, bei welchem das Objekt nicht umfahren wird, sondern als Zielobjekt Z eine Regelung auf dieses stattfindet. Das vorausfahrende Fahrzeug O ist dementsprechend nicht mehr als Zielobjekt grafisch herausgestellt, sondern das sich dazwischen befindende Fahrzeug. Auf das eigentliche Zielobjekt Z wiederum deutet ein Pfeil P zur zusätzlichen Verdeutlichung der Situation.

Zur Darstellung der beschriebenen Situationen kann eine Matrixanzeige eingesetzt werden. Darüber hinaus ist jedoch auch eine mit Piktogrammen ausgestattete Anzeige möglich, wodurch auf ein hoch entwickeltes Matrixdisplay verzichtet werden kann. Ein derartiges Display kann im Kombiinstrument eines Fahrzeugs oder separat im Armaturenbrett im Blickfeld des Fahrzeuglenkers angeordnet werden. Die beschriebenen Situationen können auch mit dem Bildschirm eines Navigations/Multimediasystems oder mit einem Head-up-Display visualisiert werden.

Durch insbesondere eine farbliche Codierung der Symbole der Grafik kann ein Anwender leicht entnehmen, welches ein Zielobjekt (z.B. orange) oder ein Objekt ist, auf das nicht reagiert wird (z.B. grau). Die Pfeile, die nicht unbedingt erforderlich sind, unterstützen eine leichte Erfassung der Szene und bringen das Regelverhalten gegebenenfalls auch voraussichtliche Regelverhalten der Vorrichtung plastisch zum Ausdruck.

## Patentansprüche

1. Fahrgeschwindigkeitsregelungsvorrichtung eines Fahrzeugs (E) mit einer Basiseinrichtung, die Sensormittel zur Detektierung wenigstens eines Umfeldes vor dem Fahrzeug (E) auf vorhandene Objekte, insbesondere Fahrzeuge (O, Z), eine Anzeige und eine Elektronikeinheit umfasst, die zur Darstellung von wenigstens einem detektierten Objekt auf der Anzeige ausgelegt ist, wobei die Basiseinrichtung dazu ausgebildet ist, eine aktuelle Fahrszene mit mehreren Objekten (O, Z) über die Sensormittel zu erfassen, auf der Anzeige darzustellen und eine Visualisierung vorzunehmen, anhand der ein Anwender erkennen kann, welches Objekt von den mehreren Objekten als Zielobjekt (Z) für eine aktuelle Geschwindigkeitsregelung von der Fahrgeschwindigkeitsregelungsvorrichtung ausgewählt worden ist, und wobei die Basiseinrichtung dazu ausgebildet ist, in der dargestellten Fahrszene ein für diese Fahrszene vorgegebenes, vom Anwender zu erwartendes Lenkmanöver zum Umfahren eines weiteren Objekts (O) auf der Anzeige durch die Anzeige einer Symbolik hervorzuheben.

2. Fahrgeschwindigkeitsregelungsvorrichtung nach Anspruch 1, **dadurch gekennzeichnet, dass** die Basiseinrichtung dazu ausgebildet ist, eine aktuelle Fahrszene über die Sensormittel zu erfassen, auf der Anzeige dazustellen und eine Visualisierung der Fahrszene durch wenigstens ein zusätzliches Symbol (P) vorzunehmen, anhand dem ein Anwender die Auswahl oder Nichtauswahl eines Objektes als Zielobjekt (Z), das für eine aktuelle oder kurz bevorstehende Geschwindigkeitsregelung herangezogen wird, erkennen kann.

3. Fahrgeschwindigkeitsregelungsvorrichtung nach Anspruch 1 oder 2, **dadurch gekennzeichnet, dass** die Basiseinrichtung zum grafischen Hervorheben des Zielobjekts (Z) auf der Anzeige ausgelegt ist.

4. Fahrgeschwindigkeitsregelungsvorrichtung nach einem der vorhergehenden Ansprüche, **dadurch gekennzeichnet, dass** die Basiseinrichtung zur Darstellung des eigenen Fahrzeugs (E) auf der Anzeige ausgelegt ist.

5. Fahrgeschwindigkeitsregelungsvorrichtung nach einem der vorhergehenden Ansprüche, **dadurch gekennzeichnet, dass** die Basiseinrichtung ausgebildet ist, die Größe/Ausdehnung wenigstens des Zielobjekts (Z) und gegebenenfalls auch weiterer Objekte (O) in der Darstellung auf der Anzeige mit der jeweiligen Objektentfernung zu korrelieren.

6. Fahrgeschwindigkeitsregelungsvorrichtung nach einem der vorhergehenden Ansprüche, **dadurch gekennzeichnet, dass** die Basiseinrichtung zur maßstabgetreuen Darstellung des Zielobjekts (Z) und gegebenenfalls weiterer Objekte (O) auf der Anzeige ausgestaltet ist.

7. Fahrgeschwindigkeitsregelungsvorrichtung nach einem der vorhergehenden Ansprüche, **dadurch gekennzeichnet, dass** eine Abbildung von Fahrbahnbegrenzungen auf der Anzeige vorgesehen ist.

8. Fahrgeschwindigkeitsregelungsvorrichtung nach einem der vorhergehenden Ansprüche, **dadurch gekennzeichnet, dass** die Basiseinrichtung zur Vornahme einer grafischen Veränderung ausgelegt ist, wenn die Geschwindigkeit des Zielobjekts (Z) größer ist als die des Eigenfahrzeugs (E) bzw. wenn ein erhöhter Verzögerungsbedarf besteht.

## Claims

1. Cruise controller for a vehicle (E) having a basic device which comprises sensor means for detecting objects, in particular vehicles (0, Z) in at least one surrounding area in front of the vehicle (E), a display, and an electronic unit which is configured to represent at least one detected object on the display, wherein the basic device is designed to sense a current driving scene with a plurality of objects (0, Z) using the sensor means, to represent them on the display and to perform visualization on the basis of which a user can detect which object has been selected by the plurality of objects as a target object (Z) for a current speed controlled by the cruise controller, and wherein the basic device is designed to highlight, on the represented driving scene, a steering manoeuvre which is predefined for this driving scene, is anticipated by the user and has the purpose of avoiding a further object (0) on the display by displaying a symbol.

2. Cruise controller according to Claim 1, **characterized in that** the basic device is designed to sense a current driving scene by using the sensor means, to represent it on the display and to perform a visualization of the driving scene by means of at least one additional symbol (P), on the basis of which a user can protect the selection or non-selection of an object as a target object (Z) which is used for a current or imminent speed control process.

3. Cruise controller according to Claim 1 or 2, **characterized in that** the basic device is configured to graphically highlight the target object (Z) on the display.

4. Cruise controller according to one of the preceding claims, **characterized in that** the basic device is configured for representation of the driver's own vehicle (E) on the display.

5. Cruise controller according to one of the preceding claims, **characterized in that** the basic device is designed to correlate the size/extent of at least one target object (Z), and if appropriate also of further objects (O), in the representation on the display with the respective distance from the object.

6. Cruise controller according to one of the preceding claims, **characterized in that** the basic device is configured to perform to scale representation of the target object (Z), and if appropriate of further objects (0), on the display.

7. Cruise controller according to one of the preceding claims, **characterized in that** there is provision for carriageway boundaries to be represented on the display.

8. Cruise controller according to one of the preceding claims, **characterized in that** the basic device is configured to perform a graphic modification if the speed of the target object (Z) is higher than that of the driver's own vehicle (E) or if there is a need for increased deceleration.

## Revendications

1. Ensemble de régulation de la vitesse de déplacement d'un véhicule (E), qui présente un dispositif de base qui comprend des moyens de détection qui détectent des objets présents au moins dans l'environnement qui précède le véhicule (E), en particulier des véhicules (O, Z), un affichage et une unité électronique conçus pour représenter sur l'affichage au moins un objet détecté,
le dispositif de base étant configuré de manière à détecter à l'aide des moyens de détection la scène de conduite actuelle qui présente plusieurs objets (O, Z), à les représenter sur l'affichage et à réaliser une visualisation à l'aide de laquelle un utilisateur peut vérifier celui des différents objets qui a été sélectionné par l'ensemble de régulation de vitesse de déplacement comme objet cible (Z) pour la régulation actuelle de la vitesse,
le dispositif de base étant configuré pour, par l'affichage d'un symbole dans la scène de conduite représentée, mettre en évidence sur l'affichage une manoeuvre de direction prévue pour cette scène de conduite et qui est attendue de l'utilisateur pour contourner un autre objet (O).

2. Ensemble de régulation de vitesse de déplacement selon la revendication 1, **caractérisé en ce que** le dispositif de base est configuré pour saisir à l'aide des moyens de détection une scène de conduite actuelle, la représenter sur l'affichage et réaliser la visualisation de la scène de conduite par au moins un symbole (P) supplémentaire à l'aide duquel l'utilisateur peut reconnaître la sélection ou la non-sélection d'un objet comme objet cible (Z) qui est mis en évidence pour la régulation actuelle de la vitesse ou une régulation qui l'a précédé brièvement.

3. Ensemble de régulation de la vitesse de déplacement selon les revendications 1 ou 2, **caractérisé en ce que** le dispositif de base est conçu pour mettre en évidence l'objet cible (Z) graphiquement sur l'affichage.

4. Ensemble de régulation de la vitesse de déplacement selon l'une des revendications précédentes, **caractérisé en ce que** le dispositif de base est conçu pour représenter son propre véhicule (E) sur l'affichage.

5. Ensemble de régulation de vitesse de déplacement selon l'une des revendications précédentes, **caractérisé en ce que** le dispositif de base est configuré pour corréler la taille et/ou l'extension au moins de l'objet cible (Z) et éventuellement d'autres objets (O) avec la distance par rapport à chaque objet dans la représentation présentée sur l'affichage.

6. Ensemble de régulation de vitesse de déplacement selon l'une des revendications précédentes, **caractérisé en ce que** le dispositif de base est configuré pour représenter l'objet cible (Z) et éventuellement d'autres objets (O) à l'échelle sur l'affichage.

7. Ensemble de régulation de vitesse de déplacement selon l'une des revendications précédentes, **caractérisé en ce qu'**une représentation des limites de la bande de circulation est prévue sur l'affichage.

8. Ensemble de régulation de la vitesse de déplacement selon l'une des revendications précédentes, **caractérisé en ce que** le dispositif de base est conçu pour réaliser une modification graphique lorsque la vitesse de l'objet cible (Z) est supérieure à celle du véhicule propre (E) et si la nécessité de ralentir augmente.
